(19) Europäisches Patentamt
European Patent Office
Office européen des brevets

(11) **EP 4 241 955 B1**

(12) **EUROPEAN PATENT SPECIFICATION**

(45) Date of publication and mention
of the grant of the patent:
**01.01.2025 Bulletin 2025/01**

(51) International Patent Classification (IPC):
**B29C 41/14** (2006.01)    **C08L 11/02** (2006.01)
**C08J 5/02** (2006.01)    **B29C 41/00** (2006.01)

(21) Application number: **22775048.6**

(22) Date of filing: **07.03.2022**

(52) Cooperative Patent Classification (CPC):
(C-Sets available)
**C08J 5/02; B29C 41/003; B29C 41/14; C08L 11/02;**
B29K 2011/00; B29K 2105/0064; B29L 2031/4864;
C08J 2311/02                          (Cont.)

(86) International application number:
**PCT/JP2022/009789**

(87) International publication number:
**WO 2022/202254 (29.09.2022 Gazette 2022/39)**

(54) **CHLOROPRENE POLYMER LATEX COMPOSITION, AND DIP MOLDED BODY**

CHLOROPRENPOLYMERLATEXZUSAMMENSETZUNG UND TAUCHFORMKÖRPER

COMPOSITION DE LATEX DE POLYMÈRE DE CHLOROPRÈNE ET CORPS MOULÉ PAR
IMMERSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2021   JP 2021049019**

(43) Date of publication of application:
**13.09.2023   Bulletin 2023/37**

(73) Proprietor: **Denka Company Limited
Tokyo 103-8338 (JP)**

(72) Inventors:
• **ITO, Misaki
  Tokyo 103-8338 (JP)**
• **KATO, Masahiro
  Tokyo 103-8338 (JP)**
• **KUMAGAI, Yushi
  Tokyo 103-8338 (JP)**

(74) Representative: **Hoffmann Eitle
Patent- und Rechtsanwälte PartmbB
Arabellastraße 30
81925 München (DE)**

(56) References cited:
EP-A1- 3 650 478            WO-A1-2019/009038
WO-A1-2021/006118        JP-A- 2010 126 586
JP-A- 2011 026 423         JP-A- 2014 114 342
JP-A- 2019 143 002         JP-A- 2019 143 002
JP-A- 2020 152 805         JP-A- H07 292 165
US-B2- 8 883 511

(52) Cooperative Patent Classification (CPC): (Cont.)

C-Sets
**C08F 236/18, C08F 2/26;**
**C08F 236/18, C08F 4/28;**
**C08L 11/02, C08L 11/02;**
C08F 236/18, C08F 236/18

## Description

## Technical Field

The present invention relates to a chloroprene polymer latex composition and a dip molded body. More specifically, the present invention relates to a chloroprene polymer latex composition containing a copolymer of chloroprene with 2,3-dichloro-1,3-butadiene, and a dip molded body using this chloroprene polymer latex composition.

## Background Art

Chloroprene polymers have been known as materials for dip molded products such as surgical gloves for medical purposes, laboratory gloves for medical purposes, industrial gloves, balloons, catheters, and rubber boots.

Various techniques concerned with improvement in flexibility of a chloroprene polymer or chloroprene polymers for dip molded products have been proposed. Patent Literature 1 below describes that damping performance is improved by mixing a low-molecular-weight chloroprene polymer having a number average molecular weight in a range of 500 to 50,000, for vibration-proof rubber applications. Patent Literature 2 below describes a polychloroprene latex having a pH of 7 to 14 for dip molded product applications, the polychloroprene latex containing 100 parts by mass of a modified polychloroprene obtained by copolymerizing chloroprene and methacrylic acid, 90 to 150 parts by mass of water, 1 to 5 parts by mass of an emulsifier, and 0.5 to 2.5 parts by mass of potassium ions. Patent Literature 3 below describes a mercaptan-modified polychloroprene latex obtained by copolymerizing chloroprene and 2,3-dichloro-1,3-butadiene for dip molded product applications, in which in a solid state 13C-NMR spectrum of the polychloroprene, a peak area (A) at 126.2 to 127.6 ppm, a peak area (B) at 122.0 to 126.2 ppm, and a peak area (C) at 129.9 to 130.3 ppm are in the ranges represented by General Formula (I) below. Patent Literature 4 below describes a chloroprene polymer latex for dip molded product applications, in which both excellent flexibility and mechanical properties can be achieved in a vulcanized rubber produced by dip molding by the chloroprene polymer latex containing a high-molecular-weight body and a low-molecular-weight body.

[Mathematical Formula 1]

$$\frac{4.0}{100} \leqq \frac{A}{B-C} \leqq \frac{5.8}{100} \quad \cdots (\text{I})$$

## Citation List

## Patent Literature

Patent Literature 1: Japanese Unexamined Patent Publication No. H7-292165

Patent Literature 2: Japanese Unexamined Patent Publication No. 2014-114342

Patent Literature 3: International Publication WO 2019/009038

Patent Literature 4: Japanese Unexamined Patent Publication No. 2019-143002

## Summary of Invention

## Technical Problem

A chloroprene polymer dip molded coating as a dip molded product is usually excellent in mechanical strength by adding a crosslinking agent such as sulfur or a vulcanization accelerator, and a chloroprene polymer latex has been used as a rubber latex raw material in a dip molded coating such as gloves, balloons, boots, catheters, and the like. On the other hand, there is a tendency that flexibility as high as that of a dip molded coating obtained by using natural rubber or polyisoprene is required, and particularly in glove applications, a chloroprene polymer latex with improved physical properties relating to flexibility directly linked to wearing comfort or coating texture is desired.

Furthermore, sulfur and a vulcanization accelerator preferably used for improving the mechanical strength are substances that correspond to Type IV allergic components causing a harmful effect to a human body. Furthermore, it is required to reduce cost in manufacturing of a dip molded coating without those components, and a chloroprene polymer latex which does not contain sulfur and a vulcanization accelerator and with which a dip molded coating excellent in breaking strength while having excellent flexibility can be provided is desired.

Therefore, a main object of the present invention is to provide a chloroprene polymer latex composition with which a chloroprene polymer dip molded coating having excellent flexibility while having a high breaking strength can be obtained without using sulfur and a vulcanization accelerator.

**Solution to Problem**

That is, the present invention relates to a chloroprene polymer latex composition being a mixture of a chloroprene polymer latex A and a chloroprene polymer latex B, in which the chloroprene polymer latex A and the chloroprene polymer latex B contain a chloroprene polymer, the chloroprene polymer of the chloroprene polymer latex B contains a copolymer of chloroprene with 2,3-dichloro-1,3-butadiene, a 2,3-dichloro-1,3-butadiene copolymerized amount (a content of the monomer unit of 2,3-dichloro-1,3-butadiene; the same applies hereinafter) in the chloroprene polymer of the chloroprene polymer latex B is 3% by mass or more with respect to the total of 100% by mass of the chloroprene and the 2,3-dichloro-1,3-butadiene, a toluene insoluble content of the chloroprene polymer of the chloroprene polymer latex B is 70% by mass or more, a weight average molecular weight of a toluene soluble content in the chloroprene polymer latex A is 5,000 to 250,000, and in a measurement result of gas chromatograph mass spectrometry of an extract which is extracted from a dried product obtained by freeze-drying the chloroprene polymer latex composition with an ethanol/toluene azeotropic mixture (an ethanol/toluene azeotropic mixture defined in JIS K 6229), a mass ratio b/a of a total amount b of abietic acid, neoabietic acid, palustric acid, levopimaric acid, and salts thereof with respect to a total amount a of dehydroabietic acid, pimaric acid, isopimaric acid, dihydroabietic acid, and salts thereof is 0.10 or more. Note that, in the present invention, "JIS" means Japanese Industrial Standards.

The above-described chloroprene polymer latex composition may be a chloroprene polymer latex composition in which a toluene insoluble content of the chloroprene polymer of the chloroprene polymer latex A is 5% by mass or less.

The above-described chloroprene polymer latex composition may be a chloroprene polymer latex composition in which the toluene insoluble content of the chloroprene polymer of the chloroprene polymer latex B is 70 to 95% by mass.

The above-described chloroprene polymer latex composition may be a chloroprene polymer latex composition in which a ratio of the chloroprene polymer latex A is 0.50 to 30.0 parts by mass with respect to the total of 100 parts by mass of the chloroprene polymer latex A and the chloroprene polymer latex B, and a toluene insoluble content of a chloroprene polymer contained in the chloroprene polymer latex composition is 50 to 85% by mass.

Furthermore, the present invention relates to a dip molded body using the above-described chloroprene polymer latex composition. Such a dip molded body may not contain sulfur and a vulcanization accelerator. The above-described dip molded body may be gloves, balloons, catheters, or boots.

**Advantageous Effects of Invention**

According to the present invention, it is possible to provide a chloroprene polymer latex composition with which a chloroprene polymer dip molded coating having excellent flexibility while having a high breaking strength can be obtained without using sulfur and a vulcanization accelerator that correspond to Type IV allergic components causing a harmful effect to a human body. In such a chloroprene polymer latex composition, for example, when the weight average molecular weight of the toluene soluble content is a relatively low molecular weight of 250,000 or less, very excellent flexibility can be obtained by the plasticizing effect of the low-molecular-weight polymer. According to the present invention, it is also possible to obtain a chloroprene polymer dip molded coating having excellent flexibility while high breaking strength and breaking elongation without using sulfur and a vulcanization accelerator.

**Description of Embodiments**

Hereinafter, embodiments for carrying out the present invention will be specifically described. Note that, the present invention is not limited to embodiments described below.

In the present specification, "A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical range may be replaced with the value shown in Examples. "A or B" may include any one of A and B, and may also include both of A and B. Materials listed as examples in the present specification can be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. The expression "(meth)acrylic acid" means at least one of acrylic acid and methacrylic acid corresponding thereto, and the same applies also to similar expressions such as "(meth)acrylate". In measurement of "toluene soluble content" and "toluene insoluble content", toluene at room temperature of 23°C can be used.

<Chloroprene polymer latex composition>

First, a chloroprene polymer latex composition of a first embodiment of the present invention will be described. The chloroprene polymer latex composition (hereinafter, referred to as "mixed chloroprene polymer latex composition") of the present embodiment is a mixture of a chloroprene polymer latex A and a chloroprene polymer latex B.

The mixed chloroprene polymer latex composition of the present embodiment can be obtained, for example, by stirring and mixing two or more kinds of chloroprene polymer latexes including the chloroprene polymer latexes A and B by using paddle blades at 100 rpm for 1 minute. The mixed chloroprene polymer latex composition of the present embodiment may be obtained by mixing chloroprene polymer latexes other than the chloroprene polymer latexes A and B. Examples of the chloroprene polymer latexes other than the chloroprene polymer latexes A and B include chloroprene polymer latexes having high crystallinity without 2,3-dichloro-1,3-butadiene being copolymerized when surface hardness is required in a dip molded body obtained by using the mixed chloroprene polymer latex composition.

(Chloroprene polymer)

The chloroprene polymer latex A contains a chloroprene polymer. The chloroprene polymer is a polymer having chloroprene (2-chloro-1,3-butadiene) as a monomer unit, and may be a homopolymer of chloroprene or a copolymer of chloroprene with another monomer (a copolymer of chloroprene with 2,3-dichloro-1,3-butadiene, or the like). The chloroprene polymer latex B contains a chloroprene polymer and this chloroprene polymer includes a copolymer of chloroprene with 2,3-dichloro-1,3-butadiene.

The copolymer of chloroprene with 2,3-dichloro-1,3-butadiene is a polymer having chloroprene and 2,3-dichloro-1,3-butadiene as monomer units, and can be obtained by polymerizing a monomer composition containing chloroprene and 2,3-dichloro-1,3-butadiene.

The copolymer of chloroprene with 2,3-dichloro-1,3-butadiene may have a monomer unit of a monomer other than the chloroprene and the 2,3-dichloro-1,3-butadiene. Examples of such a monomer include esters of (meth)acrylic acid (such as methyl (meth)acrylate, butyl (meth)acrylate, and 2-ethylhexyl (meth)acrylate), hydroxyalkyl (meth)acrylate (such as 2-hydroxymethyl (meth)acrylate, 2-hydroxyethyl (meth)acrylate, and 2-hydroxypropyl (meth)acrylate), (meth)acrylic acid, 1-chloro-1,3-butadiene, butadiene, isoprene, ethylene, styrene, and (meth)acrylonitrile. On the other hand, the copolymer of chloroprene with 2,3-dichloro-1,3-butadiene may not have a monomer unit of a monomer other than the chloroprene and the 2,3-dichloro-1,3-butadiene, and may be a copolymer substantially composed of a monomer unit of chloroprene and a monomer unit of 2,3-dichloro-1,3-butadiene.

At least one selected from the group consisting of the chloroprene polymer latex A and the chloroprene polymer latex B can contain at least one selected from the group consisting of rosin acid, sodium rosinate, and potassium rosinate, and at least one selected from the group consisting of sodium hydroxide and potassium hydroxide. An emulsion system of the chloroprene polymer latexes A and B is desired to be adjusted to a base latex in order to prevent aggregation of rubber solid contents during blending, pH fluctuation, and the like.

(Toluene insoluble content)

The toluene insoluble content of the chloroprene polymer is determined in such a manner that a chloroprene polymer obtained by freeze-drying the chloroprene polymer latexes A, B or the mixed chloroprene polymer latex composition is dissolved in toluene and subjected to centrifugal separation, and the mass of the dried product obtained by separating insoluble content (gel fraction) using a 200-mesh wire net and then drying the insoluble content is measured.

The toluene insoluble content (gel fraction) of the chloroprene polymer of the chloroprene polymer latex A is preferably 10% by mass or less with respect to 100% by mass of the chloroprene polymer. When the toluene insoluble content is 10% by mass or less, a modulus value at 100% elongation as an index of flexibility of a dip molded coating obtained by using a mixed chloroprene polymer latex composition is likely to decrease, and excellent flexibility is easily obtained.

The toluene insoluble content of the chloroprene polymer of the chloroprene polymer latex A may be 8% by mass or less, 6% by mass or less, 5% by mass or less, less than 5% by mass, 4% by mass or less, 3% by mass or less, 2% by mass or less, or 1.5% by mass or less, from the viewpoint of easily obtaining excellent flexibility. The toluene insoluble content may be 0% by mass or more, more than 0% by mass, 1% by mass or more, 1.5% by mass or more, 2% by mass or more, 3% by mass or more, 4% by mass or more, 5% by mass or more, or 6% by mass or more. From these viewpoints, the toluene insoluble content may be more than 0% by mass and 10% by mass or less, 1 to 10% by mass, 1.5 to 10% by mass, more than 0% by mass and 6% by mass or less, 1 to 6% by mass, 1.5 to 6% by mass, more than 0% by mass and 3% by mass or less, 1 to 3% by mass, or 1.5 to 3% by mass.

The toluene insoluble content (gel fraction) of the chloroprene polymer of the chloroprene polymer latex B is 70% by mass or more with respect to 100% by mass of the chloroprene polymer. When the toluene insoluble content is 70% by mass or more, excellent flexibility is obtained in a dip molded coating obtained by using the mixed chloroprene polymer latex composition, and a cross-linked structure is formed by entanglement between polymers (gelation) or the like so that the mechanical strength of the dip molded coating is increased.

The toluene insoluble content of the chloroprene polymer of the chloroprene polymer latex B may be 75% by mass or more, 80% by mass or more, 82% by mass or more, 85% by mass or more, 86% by mass or more, or 90% by mass or more, from the viewpoint of easily obtaining excellent flexibility and the viewpoint of easily increasing the mechanical strength. The toluene insoluble content may be 95% by mass or less, 90% by mass or less, 86% by mass or less, 85% by mass or less, 82% by mass or less, 80% by mass or less, or 75% by mass or less, from the viewpoint of easily avoiding a decrease in polymerization reactivity due to reduction of unreacted monomers. From these viewpoints, the toluene insoluble content may be 70 to 95% by mass, 70 to 90% by mass, 70 to 85% by mass, 75 to 95% by mass, 75 to 90% by mass, or 75 to 85% by mass.

The toluene insoluble content (gel fraction) of the chloroprene polymer contained in the mixed chloroprene polymer latex composition may be in the following range with respect to 100% by mass of the chloroprene polymer. The toluene insoluble content may be 50% by mass or more, 55% by mass or more, 60% by mass or more, 65% by mass or more, 70% by mass or more, 75% by mass or more, or 80% by mass or more. The toluene insoluble content may be 85% by mass or less, 80% by mass or less, 75% by mass or less, 70% by mass or less, 65% by mass or less, 60% by mass or less, or 55% by mass or less. From these viewpoints, the toluene insoluble content may be 50 to 85% by mass, 50 to 80% by mass, 50 to 75% by mass, 60 to 85% by mass, 60 to 80% by mass, or 60 to 75% by mass. The numerical range of the toluene insoluble content can be adjusted by the mixing ratio of the chloroprene polymer latex A and the chloroprene polymer latex B.

(Weight average molecular weight of toluene soluble content)

The weight average molecular weight of the toluene soluble content (toluene soluble sol fraction) in the chloroprene polymer latex A is 5,000 to 250,000. When the weight average molecular weight is 250,000 or less, a dip molded coating exhibiting excellent flexibility is obtained by the plasticizing effect of the low-molecular-weight polymer. When the weight average molecular weight is 5,000 or more, a dip molded coating can be suitably obtained.

The weight average molecular weight of the toluene soluble content may be in the following range from the viewpoint of easily achieving both excellent flexibility and breaking strength. The weight average molecular weight may be 6,000 or more, 7,000 or more, 10,000 or more, 12,000 or more, 15,000 or more, 16,000 or more, 18,000 or more, 20,000 or more, 22,000 or more, or 24,000 or more. The weight average molecular weight may be 240,000 or less, 220,000 or less, 200,000 or less, 180,000 or less, 100,000 or less, 50,000 or less, 25,000 or less, 24,000 or less, 22,000 or less, 20,000 or less, 18,000 or less, 16,000 or less, 15,000 or less, 12,000 or less, 10,000 or less, or 7,000 or less. From these viewpoints, the weight average molecular weight may be 5,000 to 240,000, 5,000 to 180,000, 6,000 to 240,000, 6,000 to 200,000, 6,000 to 100,000, 6,000 to 50,000, 6,000 to 25,000, 7,000 to 100,000, 7,000 to 50,000, 7,000 to 25,000, 10,000 to 100,000, 10,000 to 50,000, 10,000 to 25,000, 20,000 to 100,000, 20,000 to 50,000, or 20,000 to 25,000.

The weight average molecular weight of the toluene soluble content can be obtained by dissolving the chloroprene polymer latex A in toluene and measuring the weight average molecular weight of eluted content (sol fraction) by gel permeation chromatography (GPC). The measurement value of the weight average molecular weight varies depending on the blended amount (charged amount) of the chain transfer agent.

[Weight average molecular weight measurement by gel permeation chromatography]

GPC measurement is performed under the following conditions. Calculation of the molecular weight is determined in terms of polystyrene.

· Gel permeation chromatography (GPC) measurement apparatus: Gel permeation chromatograph (HLC-8320) manufactured by Tosoh Corporation
· Column: TSKgel ALPHA-M manufactured by Tosoh Corporation

· Eluent: Tetrahydrofuran (manufactured by KANTO CHEMICAL CO., INC.)
· Eluent flow rate: 1.0 ml/min
· Column temperature: 40°C
· Detection method: Differential refractive index (RI) meter
· Standard curve: Created using standard polystyrene

(Chloroprene copolymerized amount)

In a case where the chloroprene polymer contained in the chloroprene polymer latex A is a copolymer of chloroprene with another monomer, the chloroprene copolymerized amount (the content of the monomer unit of chloroprene; the same applies hereinafter) in the chloroprene polymer may be in the following range with respect to 100% by mass of the total amount of the monomer units in the chloroprene polymer or the total of 100% by mass of the chloroprene copolymerized amount and the 2,3-dichloro-1,3-butadiene copolymerized amount in the chloroprene polymer, from the viewpoint of easily obtaining excellent flexibility in a dip molded coating. The chloroprene copolymerized amount may be 99% by mass or less, 97% by mass or less, 95% by mass or less, 92% by mass or less, 90% by mass or less, 88% by mass or less, 85% by mass or less, 82% by mass or less, or 80% by mass or less. The chloroprene copolymerized amount may be 50% by mass or more, more than 50% by mass, 60% by mass or more, 70% by mass or more, 75% by mass or more, 80% by mass or more, 82% by mass or more, 85% by mass or more, 88% by mass or more, or 90% by mass or more. From these viewpoints, the chloroprene copolymerized amount may be 50 to 99% by mass, 70 to 99% by mass, 80 to 99% by mass, 85 to 99% by mass, 90 to 99% by mass, 50 to 90% by mass, 70 to 90% by mass, 80 to 90% by mass, 85 to 90% by mass, 50 to 85% by mass, 70 to 85% by mass, 80 to 85% by mass, 50 to 80% by mass, or 70 to 80% by mass.

The chloroprene copolymerized amount in the chloroprene polymer of the chloroprene polymer latex B may be in the following range with respect to 100% by mass of the total amount of the monomer units in the chloroprene polymer or the total of 100% by mass of the chloroprene copolymerized amount and the 2,3-dichloro-1,3-butadiene copolymerized amount in the chloroprene polymer, from the viewpoint of easily obtaining excellent flexibility in a dip molded coating. The chloroprene copolymerized amount may be 99% by mass or less, 97% by mass or less, 95% by mass or less, 92% by mass or less, 90% by mass or less, 88% by mass or less, 85% by mass or less, 82% by mass or less, or 80% by mass or less. The chloroprene copolymerized amount may be 70% by mass or more, 75% by mass or more, 80% by mass or more, 82% by mass or more, 85% by mass or more, 88% by mass or more, 90% by mass or more, 92% by mass or more, or 95% by mass or more. From these viewpoints, the chloroprene copolymerized amount may be 70 to 99% by mass, 70 to 97% by mass, 70 to 95% by mass, 70 to 90% by mass, 80 to 99% by mass, 80 to 97% by mass, 80 to 95% by mass, 80 to 90% by mass, 85 to 99% by mass, 85 to 97% by mass, 85 to 95% by mass, or 85 to 90% by mass.

(2,3-Dichloro-1,3-butadiene copolymerized amount)

In a case where the chloroprene polymer contained in the chloroprene polymer latex A is a copolymer of chloroprene with another monomer, the 2,3-dichloro-1,3-butadiene copolymerized amount in the chloroprene polymer may be in the following range with respect to 100% by mass of the total amount of the monomer units in the chloroprene polymer or the total of 100% by mass of the chloroprene copolymerized amount and the 2,3-dichloro-1,3-butadiene copolymerized amount in the chloroprene polymer, from the viewpoint of easily obtaining excellent flexibility in a dip molded coating. The 2,3-dichloro-1,3-butadiene copolymerized amount may be 1% by mass or more, 3% by mass or more, 5% by mass or more, 8% by mass or more, 10% by mass or more, 12% by mass or more, 15% by mass or more, 18% by mass or more, or 20% by mass or more. The 2,3-dichloro-1,3-butadiene copolymerized amount may be 50% by mass or less, less than 50% by mass, 40% by mass or less, 30% by mass or less, 25% by mass or less, 20% by mass or less, 18% by mass or less, 15% by mass or less, 12% by mass or less, or 10% by mass or less. From these viewpoints, the 2,3-dichloro-1,3-butadiene copolymerized amount may be 1 to 50% by mass, 1 to 30% by mass, 1 to 20% by mass, 1 to 15% by mass, 1 to 10% by mass, 10 to 50% by mass, 10 to 30% by mass, 10 to 20% by mass, 10 to 15% by mass, 15 to 50% by mass, 15 to 30% by mass, 15 to 20% by mass, 20 to 50% by mass, or 20 to 30% by mass.

The 2,3-dichloro-1,3-butadiene copolymerized amount in the chloroprene polymer of the chloroprene polymer latex B is preferably 3% by mass or more with respect to 100% by mass of the total amount of the monomer units in the chloroprene polymer or the total of 100% by mass of the chloroprene copolymerized amount and the 2,3-dichloro-1,3-butadiene copolymerized amount in the chloroprene polymer, from the viewpoint of easily obtaining excellent flexibility in a dip molded coating. When the 2,3-dichloro-1,3-butadiene copolymerized amount is 3% by mass or more, excellent flexibility in a dip molded coating is easily obtained. The 2,3-dichloro-1,3-butadiene copolymerized amount may be in the following range from the viewpoint of easily obtaining excellent flexibility in a dip molded coating. The 2,3-dichloro-1,3-butadiene copolymerized amount may be 5% by mass or more, 8% by mass or more, 10% by mass or more, 12% by mass or more, 15% by mass or more, 18% by mass or more, or 20% by mass or more. The 2,3-dichloro-1,3-butadiene copolymerized amount may be 30% by mass or less, 25% by mass or less, 20% by mass or less, 18% by mass or less, 15% by mass or less, 12% by mass or less, 10% by mass or less, 8% by mass or less, or 5% by mass or less. From these viewpoints, the 2,3-dichloro-1,3-butadiene copolymerized amount may be 3 to 30% by mass, 5 to 30% by mass, 10 to 30% by mass, 3 to 20% by mass, 5 to 20% by mass, 10 to 20% by mass, 3 to 15% by mass, 5 to 15% by mass, or 10 to 15% by mass.

The 2,3-dichloro-1,3-butadiene copolymerized amount is determined by measuring the pyrolysis gas chromatograph of the chloroprene polymer obtained by freeze-drying the chloroprene polymer latex.

[Measurement of pyrolysis gas chromatograph]

The pyrolysis gas chromatograph can be carried out under the following measurement conditions.

· Used column: DB-5 0.25 mm$\phi$ $\times$ 30 m (film thickness: 1.0 $\mu$m)
· Column temperature: 50°C -> 10°C/min -> 120°C -> 25°C/min $\rightarrow$ 300°C
· Injection port temperature: 270°C
· Detector temperature: 280°C
· Sample amount: 0.05 mg

(Mass ratio b/a)

In a measurement result of gas chromatograph mass spectrometry of an extract which is extracted from a dried product (chloroprene polymer) obtained by freeze-drying the mixed chloroprene polymer latex composition of the present embodiment with an ethanol/toluene azeotropic mixture (an ethanol/toluene azeotropic mixture defined in JIS K 6229), a mass ratio b/a (total amount b/total amount a) of a total amount b of abietic acid, neoabietic acid, palustric acid, levopimaric acid, and salts thereof with respect to a total amount a of dehydroabietic acid, pimaric acid, isopimaric acid, dihydroabietic acid, and salts thereof is 0.10 or more. When the mass ratio b/a is 0.10 or more, an excellent breaking strength can be obtained.

The mass ratio b/a may be 0.20 or more, 0.30 or more, 0.40 or more, 0.50 or more, 0.60 or more, 0.70 or more, 0.80 or more, 0.90 or more, 1.00 or more, 1.20 or more, 1.40 or more, or 1.60 or more, from the viewpoint of easily obtaining excellent breaking strength. The mass ratio b/a may be 2.00 or less, 1.80 or less, 1.60 or less, 1.40 or less, 1.20 or less, 1.00 or less, 0.90 or less, 0.80 or less, 0.70 or less, 0.60 or less, 0.50 or less, 0.40 or less, or 0.30 or less. From these viewpoints, the mass ratio b/a may be 0.10 to 2.00, 0.10 to 1.20, 0.10 to 1.00, 0.10 to 0.80, 0.10 to 0.70, 0.30 to 2.00, 0.30 to 1.20, 0.30 to 1.00, 0.30 to 0.80, 0.30 to 0.70, 0.50 to 2.00, 0.50 to 1.20, 0.50 to 1.00, 0.50 to 0.80, 0.50 to 0.70, 0.80 to 2.00, 0.80 to 1.20, 0.80 to 1.00, or 1.00 to 2.00.

Measurement of gas chromatograph mass spectrometry can be carried out after a dried product obtained by freeze-drying the mixed chloroprene polymer latex composition is cut then placed in a flask equipped with a condenser, extraction is performed with an ethanol/toluene azeotropic mixture defined in JIS K 6229, and a hydrochloric acid treatment is performed. By calculating while regarding the peak area value of each component as the content, the total amount a and the total amount b can be determined. The value of the mass ratio b/a is attributable to the types of rosin acid and a rosin acid metal salt that are added as an emulsifier.

[Measurement conditions of gas chromatograph mass spectrometry]

The gas chromatograph mass spectrometry can be carried out under the following measurement conditions.

· Used column: FFAP 0.32 mm$\phi$ $\times$ 25 m (film thickness: 0.3 $\mu$m)
· Column temperature: 200°C -> 250°C
· Temperature increase rate: 10°C/min
· Injection port temperature: 270°C
· Injection amount: 1 $\mu$L
· Interface temperature: 270°C
· Ion source temperature: 270°C
· Ionization current: 50 $\mu$A
· Ionization voltage: 70 eV
· Detector voltage: -1000 V
· Detector voltage: EI method

(Mixing ratio of chloroprene polymer latex)

The ratio (mixing ratio) of the chloroprene polymer latex A may be in the following range with respect to the total of 100 parts by mass of the chloroprene polymer latex A and the chloroprene polymer latex B at a solid content ratio, from the viewpoint of easily achieving both the breaking strength and the flexibility in a dip molded coating obtained by using the mixed chloroprene polymer latex composition. The ratio of the chloroprene polymer latex A may be 0.5 parts by mass or more, 1 part by mass or more, 5 parts by mass or more, 10 parts by mass or more, 15 parts by mass or more, 20 parts by mass or more, 25 parts by mass or more, or 30 parts by mass or more. The ratio of the chloroprene polymer latex A may be 50 parts by mass or less, 40 parts by mass or less, 30 parts by mass or less, 25 parts by mass or less, 20 parts by mass or less, 15 parts by mass or less, 10 parts by mass or less, or 5 parts by mass or less. From these viewpoints, the ratio of the chloroprene polymer latex A may be 0.5 to 50 parts by mass, 0.5 to 30 parts by mass, 0.5 to 25 parts by mass, 0.5 to 20 parts by mass, 0.5 to 15 parts by mass, 5 to 50 parts by mass, 5 to 30 parts by mass, 5 to 25 parts by mass, 5 to 20 parts by mass, 5 to 15 parts by mass, 10 to 50 parts by mass, 10 to 30 parts by mass, 10 to 25 parts by mass, 10 to 20 parts by mass, or 10 to 15 parts by mass.

(Effect obtained by mixed chloroprene polymer latex composition)

According to the mixed chloroprene polymer latex composition of the present embodiment, it is possible to obtain a chloroprene polymer dip molded coating having excellent flexibility while having a high breaking strength without using sulfur and a vulcanization accelerator. Specifically, a dip molded coating obtained by vulcanizing the mixed chloroprene polymer latex composition at 130°C for 4 hours without using sulfur and a vulcanization accelerator provides a modulus at 100% elongation of 0.40 to 0.75 MPa and a breaking strength of 17 MPa or more when measured according to JIS K 6251. In particular, in "D3577" of ASTM standard in surgical glove applications, the breaking strength is defined to be 17 MPa or more. This dip molded coating has excellent flexibility and has a sufficient mechanical strength without containing sulfur and a vulcanization accelerator.

In a conventional chloroprene polymer, it was essential to use sulfur or a vulcanization accelerator in order to obtain a vulcanized rubber having an intended mechanical strength. The sulfur and the vulcanization accelerator are causal substances of Type IV allergy causing dermatological diseases such as dermatitis, and thus it is an important theme to reduce or not to use the sulfur and the vulcanization accelerator. Furthermore, since non-use of sulfur and a vulcanization accelerator leads not only to reduction of allergy but also to cost reduction, a chloroprene polymer latex composition with which a dip molded product exhibiting a sufficient mechanical strength while having excellent flexibility can be obtained without using sulfur and a vulcanization accelerator is desired.

A dip molded coating obtained from the mixed chloroprene polymer latex composition of the present embodiment may contain sulfur and/or a vulcanization accelerator. However, the above-described dip molded coating has mechanical properties similar to or higher than those of a vulcanized dip molded coating obtained from a conventional chloroprene polymer latex without containing sulfur and a vulcanization accelerator. Therefore, the mixed chloroprene polymer latex composition of the present embodiment is suitably used as a raw material for a dip molded coating.

(Method for manufacturing chloroprene polymer latexes A and B)

Next, a method for manufacturing the chloroprene polymer latexes A and B will be described.

The method for manufacturing the chloroprene polymer latex A includes a polymerization step of subjecting a monomer composition containing at least one selected from the group consisting of chloroprene and 2,3-dichloro-1,3-butadiene to emulsion polymerization. The polymerization step may be a step of subjecting chloroprene, 2,3-dichloro-1,3-butadiene, and alkyl mercaptan to emulsion polymerization to obtain a chloroprene polymer latex.

The method for manufacturing the chloroprene polymer latex B includes a polymerization step of subjecting a monomer composition containing chloroprene and 2,3-dichloro-1,3-butadiene to emulsion polymerization. The polymerization step may be a step of subjecting chloroprene, 2,3-dichloro-1,3-butadiene, and alkyl mercaptan to emulsion polymerization to obtain a chloroprene polymer latex.

The 2,3-dichloro-1,3-butadiene copolymerized amount in the chloroprene polymer of the chloroprene polymer latex B may be, as described above, 3% by mass or more or the like (for example, 3 to 30% by mass) with respect to 100% by mass of the total amount of the monomer units in the chloroprene polymer or the total of 100% by mass of the chloroprene and the 2,3-dichloro-1,3-butadiene in the chloroprene polymer. In this case, the blended amount (charged amount) of the 2,3-dichloro-1,3-butadiene in the polymerization step (before emulsion polymerization initiation) may be 3 parts by mass or more or the like (for example, 3 to 30 parts by mass) with respect to 100 parts by mass of the total amount of the monomers for obtaining the chloroprene polymer or the total of 100 parts by mass of the chloroprene and the 2,3-dichloro-1,3-butadiene.

The types of the chain transfer agent used at the time of the emulsion polymerization are not particularly limited.

As the chain transfer agent, for example, it is possible to use known chain transfer agents that are usually used in emulsion polymerization of chloroprene, including long chain alkylmercaptans such as n-dodecylmercaptan (1-dodecylmercaptan) and tert-dodecylmercaptan, dialkylxanthogen disulfides such as diisopropylxanthogen disulfide and diethylxanthogen disulfide, iodoform, or the like.

In the chloroprene polymer latex A, the weight average molecular weight can be adjusted by the blended amount (charged amount) of the chain transfer agent before emulsion polymerization initiation. For example, the blended amount of the chain transfer agent (for example, the blended amount of a mercaptan-based chain transfer agent (such as n-dodecylmercaptan)) is preferably 0.50 to 10.0 parts by mass with respect to the total of 100 parts by mass of the chloroprene and the 2,3-dichloro-1,3-butadiene. Thereby, the weight average molecular weight of the toluene soluble content is easily adjusted to 5,000 to 250,000, and the flexibility of a dip molded coating obtained by using a mixed chloroprene polymer latex composition is easily improved.

In the chloroprene polymer latex B, the blended amount (charged amount) of the chain transfer agent (for example, alkyl mercaptan) before emulsion polymerization initiation is preferably 0.01 to 0.1 parts by mass and more preferably 0.02 to 0.05 parts by mass with respect to the total of 100 parts by mass of the chloroprene and the 2,3-dichloro-1,3-butadiene. When the blended amount of the chain transfer agent is 0.01 parts by mass or more, the storage stability of the latex is easily improved. When the blended amount of the chain transfer agent is 0.1 parts by mass or less, the toluene insoluble content increases, and the strength of a dip molded coating obtained by using the mixed chloroprene polymer latex composition is likely to increase.

The emulsifier used in the emulsion polymerization is preferably rosin acids and more preferably rosin acids including abietic acid, neoabietic acid, palustric acid, levopimaric acid, and salts thereof, from the viewpoint of easily obtaining an excellent breaking strength. Furthermore, by using rosin acids, aggregation of rubber solid contents during blending with a base latex, pH fluctuation, and the like can be prevented.

Furthermore, other emulsifiers, fatty acids, and the like that are generally used can also be used. Examples of the other emulsifiers include a metal salt of aromatic sulfonic acid formalin condensate (for example, a sodium salt of β-naphthalene sulfonic acid formalin condensate), sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, and potassium polyoxypropylene alkyl ether sulfonate.

The content of an anionic surfactant excluding rosin acid is preferably 0.2 to 1.0% by mass with respect to 100% by mass of the chloroprene polymer contained in the chloroprene polymer latex. Therefore, the blended amount (charged amount) of the anionic surfactant excluding rosin acid before emulsion polymerization initiation is preferably set within a range of 0.2 to 0.9 parts by mass with respect to the total of 100 parts by mass of the chloroprene and the 2,3-dichloro-1,3-butadiene.

The pH of the aqueous emulsion at the time of emulsion polymerization initiation is preferably 10.5 to 13.5. The aqueous emulsion refers to a liquid mixture of alkyl mercaptan, chloroprene, 2,3-dichloro-1,3-butadiene, and the like before emulsion polymerization initiation, but also encompasses a case where the composition thereof varies by adding respective components afterward, portionwise, etc. When the pH of the aqueous emulsion at the time of emulsion polymerization initiation is 10.5 or more, the polymerization reaction can be more stably controlled. When the pH is 13.5 or less, an excessive increase in viscosity during polymerization is suppressed, and the polymerization reaction can be more stably controlled.

The polymerization temperature of emulsion polymerization may be within a range of 5 to 55°C. When the polymerization temperature is 5°C or higher, the emulsion is hardly frozen. When the polymerization temperature is 55°C or lower, transpiration and boiling of the chloroprene monomer are easily suppressed.

As a polymerization initiator, potassium persulfate, benzoyl peroxide, ammonium persulfate, hydrogen peroxide, or the like, which is usually used in radical polymerization, may be used.

The polymerization conversion rate may be in a range of 50 to 95%. The polymerization reaction can be terminated by adding a polymerization inhibitor. When the polymerization conversion rate is 50% or more, the toluene insoluble content increases so that the strength of a dip molded coating to be obtained is likely to increase, and there is an advantage in terms of production cost. When the polymerization conversion rate is 95% or less, a decrease in polymerization reactivity due to reduction of unreacted monomers is avoided, and a decrease in productivity is avoided.

Examples of the polymerization inhibitor include diethylhydroxylamine, thiodiphenylamine, 4-tert-butylcatechol, and 2,2'-methylenebis-4-methyl-6-tert-butylphenol. The unreacted monomer after the completion of emulsion polymerization can be removed by a common method such as distillation under a reduced pressure.

Furthermore, to the chloroprene polymer latexes A and B, a freezing stabilizer, an emulsion stabilizer, a viscosity modifier, an antioxidant, an antiseptic, or the like can be arbitrarily added after polymerization.

<Dip molded body>

Next, a dip molded body of a second embodiment of the present invention will be described. The dip molded body of the present embodiment is a dip molded body using the aforementioned mixed chloroprene polymer latex composition of the first embodiment, and for example, is obtained by dip-molding the mixed chloroprene polymer latex composition of the first embodiment alone (obtained by dip-molding the mixed chloroprene polymer latex composition of the first embodiment without mixing with another chloroprene polymer latex) or obtained by blending the mixed chloroprene polymer latex composition of the first embodiment and another chloroprene polymer latex and then dip-molding. That is, the dip molded body of the present embodiment may be a dip molded body of the mixed chloroprene polymer latex composition of the first embodiment alone, or a dip molded body of a mixed latex composition obtained by mixing the mixed chloroprene polymer latex composition of the first embodiment and another chloroprene polymer latex. The dip molded body of the present embodiment has a low modulus at 100% elongation, is soft, and is excellent in mechanical properties such as strength and elongation. The dip molded body of the present embodiment may be gloves, balloons, catheters, or boots.

Examples of a method for manufacturing (method for forming) a dip molded body of the present embodiment include a congealing liquid dipping method, but the molding method is not limited thereto, and the dip-molded article may be molded according to a common method.

The dip molded body of the present embodiment may not contain at least one selected from the group consisting of a vulcanizing agent and a vulcanization accelerator, and may contain at least one selected from the group consisting of a vulcanizing agent and a vulcanization accelerator. That is, the dip molded body of the present embodiment includes an aspect containing a vulcanizing agent and not containing a vulcanization accelerator, an aspect not containing a vulcanizing agent and containing a vulcanization accelerator, an aspect containing a vulcanizing agent and a vulcanization accelerator, and an aspect not containing a vulcanizing agent and a vulcanizing agent. Whether or not a vulcanizing agent and a vulcanization accelerator are blended may be determined depending on an intended dip molded body.

Examples of the vulcanizing agent include sulfur, zinc oxide, and magnesium oxide, but are not limited thereto.

The vulcanization accelerator is a chemical agent that is added for the purpose of shortening a vulcanization time, lowering a vulcanization temperature, decreasing a vulcanizing agent amount, improving physical properties of a vulcanized rubber, and the like by interacting with a vulcanizing agent to increase a vulcanization rate at the time of vulcanization of a raw material rubber. The vulcanization accelerator generally refers to a chemical agent that accelerates a sulfur vulcanization reaction.

Examples of the vulcanization accelerator that is generally used in vulcanization of the chloroprene polymer latex include thiuram-based, dithiocarbamate-based, thiourea-based, guanidine-based, xanthate-based, and thiazole-based vulcanization accelerators, but are not limited thereto. The vulcanization accelerator is used alone or in combination with two or more kinds thereof as necessary, but is not limited thereto.

Examples of the thiuram-based vulcanization accelerator include tetramethylthiuram disulfide, tetraethylthiuram disulfide, tetrabutylthiuram disulfide, tetrakis(2-ethylhexyl)thiuram disulfide, tetramethylthiuram monosulfide, and dipentamethylenethiuram tetrasulfide.

Examples of dithiocarbamate-based vulcanization accelerator include sodium dibutyldithiocarbamate, zinc dimethyldithiocarbamate, zinc diethyldithiocarbamate, zinc dibutyldithiocarbamate, zinc N-ethyl-N-phenyldithiocarbamate, zinc N-pentamethylenedithiocarbamate, copper dimethyldithiocarbamate, ferric dimethyldithiocarbamate, and tellurium diethyldithiocarbamate, and particularly, zinc dibutyldithiocarbamate is suitably used.

Examples of the thiourea-based vulcanization accelerator include ethylene thiourea, N,N'-diethylthiourea, trimethylthiourea, and N,N'-diphenylthiourea.

Examples of the guanidine-based vulcanization accelerator include 1,3-diphenylguanidine, 1,3-di-o-tolylguanidine, 1-o-tolylbiguanide, and dicatechol borate di-o-tolylguanidine salt.

Examples of the xanthate-based vulcanization accelerator include zinc butylxanthate and zinc isopropylxanthate.

Examples of the thiazole-based vulcanization accelerator include 2-mercaptobenzothiazole, di-2-benzothiazolyl disulfide, 2-mercaptobenzothiazole zinc salt, 2-mercaptobenzothiazole cyclohexylamine salt, and 2-(4'-morpholinodithio)benzothiazole.

The dip molded body of the present embodiment exhibits excellent mechanical properties regardless of presence or absence of sulfur and a vulcanization accelerator, but preferably does not contain sulfur and a vulcanization accelerator from the viewpoint of reducing allergy and reducing cost.

**Examples**

Hereinafter, the present invention will be more specifically described on the basis of Examples, Comparative Examples, and Reference Examples; however, the present invention is not limited to these Examples.

<Example 1>

(Production of chloroprene polymer latex A)

To a polymerization tank having an inner volume of 40 L, 80 parts by mass of a chloroprene monomer, 20 parts by mass of a 2,3-dichloro-1,3-butadiene monomer, 3 parts by mass of 1-dodecylmercaptan, 90 parts by mass of pure water, 4.5 parts by mass of rosin acid X (mass ratio b/a = 0.80), 1.50 parts by mass of potassium hydroxide, and 0.50 parts by mass of a sodium salt of β-naphthalene sulfonic acid formalin condensate (trade name "DEMOL N", manufactured by Kao Corporation) were added. The pH of the aqueous emulsion before polymerization initiation was 12.9. 0.1 parts by mass of potassium persulfate was added as a polymerization initiator, and polymerization was performed under a nitrogen flow at a polymerization temperature of 20°C. 0.01 parts by mass of diethylhydroxylamine as a polymerization inhibitor was added at the time point of a polymerization conversion rate of 85% to terminate the polymerization, thereby obtaining a latex.

The above-described latex was subjected to distillation under a reduced pressure to remove unreacted monomers and moisture, thereby obtaining a chloroprene polymer latex A (mercaptan-modified chloroprene polymer latex) having a solid content of 55%.

(Production of chloroprene polymer latex B)

To a polymerization tank having an inner volume of 40 L, 95 parts by mass of a chloroprene monomer, 5 parts by mass of a 2,3-dichloro-1,3-butadiene monomer, 0.04 parts by mass of 1-dodecylmercaptan, 90 parts by mass of pure water, 4.3 parts by mass of rosin acid X (mass ratio b/a = 0.80), 1.50 parts by mass of potassium hydroxide, and 0.50 parts by mass of a sodium salt of β-naphthalene sulfonic acid formalin condensate (trade name "DEMOL N", manufactured by Kao Corporation) were added. The pH of the aqueous emulsion before polymerization initiation was 13.2. 0.1 parts by mass of potassium persulfate was added as a polymerization initiator, and polymerization was performed under a nitrogen flow at a polymerization temperature of 15°C. 0.01 parts by mass of diethylhydroxylamine as a polymerization inhibitor was added at the time point of a polymerization conversion rate of 70% to terminate the polymerization, thereby obtaining a latex.

The above-described latex was subjected to distillation under a reduced pressure to remove unreacted monomers and moisture, thereby obtaining a chloroprene polymer latex B (mercaptan-modified chloroprene polymer latex) having a solid content of 55%.

(Measurement of mass ratio b/a of rosin acid)

The aforementioned rosin acid X was dissolved in an ethanol/toluene azeotropic mixture (an ethanol/toluene azeotropic mixture defined in JIS K 6229, an ETA solution) to prepare a 1.5% solution, a hydrochloric acid treatment was then performed, and measurement was performed using gas chromatograph mass spectrometry. The area percentage with respect to the total peak area value detected by gas chromatograph mass spectrometry was regarded as the content, the total amount a of dehydroabietic acid, pimaric acid, isopimaric acid, dihydroabietic acid, and salts thereof and the total amount b of abietic acid, neoabietic acid, palustric acid, levopimaric acid, and salts thereof were calculated, and the mass ratio b/a of the total amount b with respect to the total amount a was calculated.

Among the conjugate resin acid components, the abietic acid component (abietic acid and a salt thereof; this is also the same for other resin acid components), the neoabietic acid component, the palustric acid component, and the levopimaric acid component were detected to be 31.2%, 0.8%, 4.0%, and 2.7%, respectively, and the total area of the conjugate resin acid components was 38.7%. Among the non-conjugate resin acid components, the dehydroabietic acid component, the pimaric acid component, the isopimaric acid component, and dihydroabietic acid component were detected to be 35.3%, 7.5%, 3.2%, and 2.4%, respectively, and the total area of the non-conjugate resin acid components was 48.4%. Therefore, the value (mass ratio b/a) of "(the content of the conjugate resin acid component) ÷ (the content of the non-conjugate resin acid component)" in the rosin acid X was "38.7 ÷ 48.4 = 0.80". Rosin acid Y (mass ratio b/a = 1.87) and rosin acid Z (mass ratio b/a = 0; abietic acid, neoabietic acid, palustric acid, levopimaric acid, and salts thereof were not detected) described below were also analyzed in the same manner to obtain the mass ratio b/a.

(Measurement of toluene insoluble content of chloroprene polymer latexes A and B)

1 g of a chloroprene polymer obtained by freeze-drying the above-described chloroprene polymer latexes A and B was cut into 2 mm square to obtain a small piece, and then this small piece was placed in a conical beaker and dissolved with toluene for 16 hours. Thereafter, centrifugal separation was performed, the gel fractions were separated using a 200-mesh wire net and then dried to obtain a dried product, and the mass of the dried product was measured to calculate the toluene insoluble content. The toluene insoluble content of the chloroprene polymer latex A was 1.1% by mass, and the toluene insoluble content of the chloroprene polymer latex B was 82% by mass.

(Measurement of weight average molecular weight of toluene soluble content of chloroprene polymer latex A)

The weight average molecular weight of eluted content (sol fraction) when the above-described chloroprene polymer latex A was dissolved in toluene was measured in terms of polystyrene by gel permeation chromatography and was found to be 24,000.

(Measurement of 2,3-dichloro-1,3-butadiene copolymerized amount)

The chloroprene polymer obtained by freeze-drying the above-described chloroprene polymer latexes A and B was cut into 0.05 mg of a test piece, and measurement was performed by pyrolysis gas chromatograph. The 2,3-dichloro-1,3-butadiene copolymerized amount of the chloroprene polymer latex measured by this pyrolysis gas chromatograph was 21% by mass for the chloroprene polymer latex A and 4.6% by mass for the chloroprene polymer latex B, with respect to the total of 100% by mass of the chloroprene and the 2,3-dichloro-1,3-butadiene in the chloroprene polymer. From this analysis value, it was confirmed that the 2,3-dichloro-1,3-butadiene copolymerized amount in the chloroprene polymer has approximately correlation with the blended amount (charged amount) of the 2,3-dichloro-1,3-butadiene.

(Preparation of mixed latex composition)

When the total of the chloroprene polymer latex A and the chloroprene polymer latex B was regarded as 100 parts by mass, a mixed latex composition (mixed chloroprene polymer latex composition) was obtained by stirring and mixing the chloroprene polymer latex A and the chloroprene polymer latex B at a ratio of 10 parts by mass : 90 parts by mass (solid content ratio).

(Measurement of mass ratio b/a of rosin acid in mixed latex composition)

3 g of the dried product (chloroprene polymer) obtained by freeze-drying the above-described mixed latex composition was cut into 2 mm square to obtain a small piece. This small piece was placed in an eggplant-shaped flask equipped with a condenser, was dissolved in an ethanol/toluene azeotropic mixture (an ethanol/toluene azeotropic mixture defined in JIS K 6229, an ETA solution) to prepare a 1.5% solution. Thereafter, a hydrochloric acid treatment was performed, and measurement was performed using gas chromatograph mass spectrometry. The area percentage with respect to the total peak area value detected by gas chromatograph mass spectrometry was regarded as the content, the total amount a of dehydroabietic acid, pimaric acid, isopimaric acid, dihydroabietic acid, and salts thereof and the total amount b of abietic acid, neoabietic acid, palustric acid, levopimaric acid, and salts thereof were calculated, and the mass ratio b/a of the total amount b with respect to the total amount a was calculated. The mass ratio b/a was 0.80.

(Measurement of toluene insoluble content of mixed latex composition)

1 g of a chloroprene polymer obtained by freeze-drying the above-described mixed latex composition was cut into 2 mm square to obtain a small piece, and then this small piece was placed in a conical beaker and dissolved with toluene for 16 hours. Thereafter, centrifugal separation was performed, the gel fractions were separated using a 200-mesh wire net and then dried to obtain a dried product, and the mass of the dried product was measured to calculate the toluene insoluble content. The toluene insoluble content of the mixed latex composition was 72% by mass.

(Production of evaluation sample)

4.1 parts by mass of an aqueous dispersion was mixed with 100 parts by mass of solid content of the above-described mixed latex composition, and then water was added to adjust the entire solid content concentration of the blended product to 30% by mass, thereby producing a composition for molding not containing sulfur and a vulcanization accelerator. The above-described aqueous dispersion was prepared by mixing 2 parts by mass zinc oxide (vulcanizing agent, trade name "Zinc oxide II", manufactured by SAKAI CHEMICAL INDUSTRY CO., LTD.), 2 parts by mass of a butylated reaction product of p-cresol and dicyclopentadiene (trade name "NOCRAC PBK", manufactured by OUCHI SHINKO CHEMICAL INDUSTRIAL CO., LTD.), 0.1 parts by mass of a sodium salt of $\beta$-naphthalene sulfonic acid formalin condensate (trade name "DEMOL N", manufactured by Kao Corporation), and 13 parts by mass of water by using a ceramic ball mill at 20°C for 16 hours.

A ceramic cylinder (manufactured by SHINKO IND. LTD.) having an outside diameter of 50 mm was immersed for 1 second in a congealing liquid obtained by mixing 62 parts by mass of water, 35 parts by mass of potassium nitrate tetrahydrate, and 3 parts by mass of calcium carbonate and then the cylinder was taken out. After drying was performed at room temperature of 23°C for 3 minutes, the above-described cylinder was immersed in the above-described composition for molding for 10 seconds. Thereafter, washing was performed with running water at 45°C for 1 minute and then vulcanization was performed at 130°C for 4 hours to produce a vulcanized film (a dip molded coating; a vulcanized film not containing sulfur and a vulcanization accelerator) as an evaluation sample. The vulcanized film was peeled off from the outer periphery of the cylinder and then evaluation was performed.

(Evaluation of evaluation sample)

The modulus at 100% elongation, the breaking strength, and the breaking elongation of the above-described vulcanized film were measured according to JIS K 6251.

<Examples 2 to 9, Comparative Examples 1 to 5, and Reference Examples 1 and 2>

A vulcanized film was produced and evaluated in the same manner as in Example 1 under the conditions shown in Tables 1 to 3. In Examples 6 to 9 and Comparative Examples 4 and 5, the rosin acid Y (mass ratio b/a = 1.87) was used. In Examples 5 to 9 and Comparative Example 3, the rosin acid Z (mass ratio b/a = 0; abietic acid, neoabietic acid, palustric acid, levopimaric acid, and salts thereof were not detected) was used.

<Result>

The results of Examples 1 to 9, Comparative Examples 1 to 5, and Reference Examples 1 to 2 are shown in Table 1 to Table 3.

[Table 1]

| | | | Example 1 | | Example 2 | | Example 3 | | Example 4 | | Example 5 | |
|---|---|---|---|---|---|---|---|---|---|---|---|---|
| | | | A | B | A | B | A | B | A | B | A | B |
| Blending component | | Chloroprene | 80 | 95 | 80 | 95 | 80 | 95 | 100 | 85 | 90 | 90 |
| | | 2,3-Dichloro-1.3-butadiene | 20 | 5 | 20 | 5 | 20 | 5 | 0 | 15 | 10 | 10 |
| | | 1-Dodecylmercaptan | 3 | 0.04 | 3 | 0.04 | 3 | 0.04 | 5 | 0.02 | 1 | 0.03 |
| | | Rosin acid X (b/a = 0.80) | 4.5 | 4.3 | 4.5 | 4.3 | 4.5 | 4.3 | 4.5 | 4.3 | - | 4.5 |
| | | Rosin acid Y (b/a = 1.87) | - | - | - | - | - | - | - | - | - | - |
| | | Rosin acid Z (b/a = 0) | - | - | - | - | - | - | - | - | 4.3 | - |
| Polymerization temperature [°C] | | | 20 | 15 | 20 | 15 | 20 | 15 | 40 | 20 | 15 | 40 |
| Polymerization conversion rate [%] | | | 85 | 70 | 85 | 70 | 85 | 70 | 85 | 80 | 85 | 60 |
| b/a of entire rosin acid of each latex | | | 0.80 | 0.80 | 0.80 | 0.80 | 0.80 | 0.80 | 0.80 | 0.80 | 0 | 0.80 |
| Toluene insoluble content [% by mass] | | | 1.1 | 82 | 1.1 | 82 | 1.1 | 82 | 6.7 | 80 | 1.9 | 72 |
| Weight average molecular weight of toluene soluble content | | | 24,000 | - | 24.000 | - | 24,000 | - | 15.000 | - | 60,000 | - |
| Mixed latex composition | | Mixing ratio of latex [parts by mass] | 10 | 90 | 30 | 70 | 5 | 95 | 25 | 75 | 15 | 85 |
| | | b/a of entire rosin acid | 0.80 | | 0.80 | | 0.80 | | 0.80 | | 0.68 | |
| | | Toluene insoluble content [% by mass] | 72 | | 52 | | 78 | | 75 | | 65 | |
| Dip molded body | | Modulus at 100% elongation [MPa] | 0.66 | | 0.42 | | 0.68 | | 0.44 | | 0.56 | |
| | | Breaking strength [MPa] | 22.3 | | 17.9 | | 24.4 | | 18.9 | | 18.2 | |
| | | Breaking elongation [%] | 1180 | | 1160 | | 1200 | | 1250 | | 1180 | |

[Table 2]

| | | Example 6 | | Example 7 | | Example 8 | | Example 9 | |
|---|---|---|---|---|---|---|---|---|---|
| | | A | B | A | B | A | B | A | B |
| Blending component | Chloroprene | 85 | 95 | 90 | 90 | 90 | 80 | 85 | 95 |
| | 2,3-Dichloro-1,3-butadiene | 15 | 5 | 10 | 10 | 10 | 20 | is | 5 |
| | 1-Dodecylmercaptan | 0.5 | 0.03 | 0.8 | 0.02 | 10 | 0.03 | 3 | 0.03 |
| | Rosin acid X (b/a = 0.80) | - | 3.2 | - | - | - | - | - | - |
| | Rosin acid Y (b/a = 1.87) | 4.5 | - | 4.5 | - | 2.2 | 4.5 | - | 1.1 |
| | Rosin acid Z (b/a = 0) | - | 1.2 | - | 4.5 | 2.2 | - | 4.5 | 3.3 |
| Polymerization temperature [°C] | | is | 10 | is | 20 | 40 | 20 | 40 | 20 |
| Polymerization conversion rate [%] | | 70 | 80 | 85 | 90 | 85 | 90 | 85 | 85 |
| b/a of entire rosin acid of each latex | | 1.87 | 0.58 | 1.87 | 0 | 0.94 | 1.87 | 0 | 0.47 |
| Toluene insoluble content [% by mass] | | 1.9 | 85 | 1.1 | 87 | 5.8 | 90 | 1.9 | 86 |
| Weight average molecular weight of toluene soluble content | | 160,000 | - | 70.000 | - | 7,000 | - | 22,000 | - |
| Mixed latex composition | Mixing ratio of latex [parts by mass] | 20 | 80 | 25 | 75 | 20 | 80 | 10 | 90 |
| | b/a of entire rosin acid | 0.84 | | 0.47 | | 1.68 | | 0.23 | |
| | Toluene insoluble content [% by mass] | 78 | | 62 | | 75 | | 82 | |
| Dip molded body | Modulus at 100% elongation [MPa] | 0.65 | | 0.50 | | 0.58 | | 0.73 | |
| | Breaking strength [MPa] | 18.5 | | 17.5 | | 19.9 | | 19.9 | |
| | Breaking elongation [%] | 1160 | | 1250 | | 1200 | | 1220 | |

[Table 3]

| | | Comparative Example 1 | | Comparative Example 2 | | Comparative Example 3 | | Comparative Example 4 | | Comparative Example 5 | | Reference Example 1 | | Reference Example 2 | |
|---|---|---|---|---|---|---|---|---|---|---|---|---|---|---|---|
| | | A | B | A | B | A | B | A | B | A | B | A | B | A | B |
| Blending component | Chloroprene | 90 | 85 | 95 | 85 | 90 | 90 | 80 | 100 | 85 | 80 | Not used | 95 | 80 | Not used |
| | 2,3-Dichloro-1,3-butadiene | 10 | 15 | 5 | 15 | 10 | 10 | 20 | 0 | 15 | 20 | | 5 | 20 | |
| | 1-Dodecylmercaptan | 0.35 | 0.02 | is | 0.02 | 1 | 0.02 | 3 | 0.03 | 0.5 | 0.04 | | 0.04 | 3 | |
| | Rosin acid X (b/a = 0.80) | 4.5 | 4.3 | 4.5 | 4.3 | | - | 4.5 | - | - | 4.3 | | 4.3 | 4.5 | |
| | Rosin acid Y (b/a = 1.87) | - | - | - | - | | - | - | 4.3 | 4.5 | - | | - | - | |
| | Rosin acid Z (b/a = 0) | - | - | - | - | 4.5 | 4.3 | - | - | - | - | | - | - | |
| Polymerization temperature [°C] | | 40 | 20 | 30 | 20 | 15 | 20 | 20 | 20 | is | 15 | | 15 | 20 | |
| Polymerization conversion rate [%] | | 85 | 80 | 60 | 80 | 85 | 90 | 85 | 75 | 70 | 30 | | 70 | 85 | |
| b/a of entire rosin acid of each latex | | 0.80 | 0.80 | 0.80 | 0.80 | 0 | 0 | 0.80 | 1.87 | 1.87 | 0.80 | | 0.80 | 0.80 | |
| Toluene insoluble content [% by mass] | | 3.8 | 80 | 1.4 | 80 | 1.9 | 87 | 1.1 | 5.7 | 1.9 | 24 | | 82 | 1.1 | |
| Weight average molecular weight of toluene soluble content | | 280,000 | - | 4,300 | - | 60,000 | - | 24,000 | - | 160,000 | - | | - | 24,000 | |
| Mixed latex composition | Mixing ratio of latex [parts by mass] | 20 | 80 | 20 | 80 | 10 | 90 | 30 | 70 | 20 | 80 | 0 | 100 | 100 | 0 |
| | b/a of entire rosin acid | 0.80 | | 0.80 | | 0 | | 1.55 | | 1.01 | | 0.80 | | 0.80 | |
| | Toluene insoluble content [% by mass] | 62 | | 57 | | 70 | | 4 | | 22 | | 82 | | 1.1 | |
| Dip molded body | Modulus at 100% elongation [MPa] | 0.78 | | Unavailable production | | 0.69 | | 2.4 | | 1.2 | | 0.82 | | Unavailable production | |
| | Breaking strength [MPa] | 18.9 | | | | 16.2 | | 24.5 | | 13.2 | | 25.6 | | | |
| | Breaking elongation [%] | 1220 | | | | 1320 | | 900 | | 1080 | | 1280 | | | |

EP 4 241 955 B1

17

As apparent from Tables 1 to 3, the dip molded coating (dip molded body) obtained by using each of the mixed latex compositions of Examples 1 to 9 was excellent mechanical properties (breaking strength and breaking elongation) while having a very low modulus at 100% elongation (very excellent flexibility).

In Comparative Example 1, the weight average molecular weight of the chloroprene polymer latex A was more than 250,000, the value of the modulus at 100% elongation became higher, and flexibility was poor.

In Comparative Example 2, the weight average molecular weight of the chloroprene polymer latex A was less than 5,000, and when a dip molded coating was tried to be produced, the low-molecular-weight chloroprene polymer of the chloroprene polymer latex A was bled (leaked out) to cause severe stickiness, so that a dip molded coating could not be produced.

In Comparative Example 3, since the rosin acid Z (mass ratio b/a = 0) was used as an emulsifier in both of the chloroprene polymer latexes A and B and the mass ratio b/a of the mixed latex composition was 0, the breaking strength was poor.

In Comparative Example 4, 2,3-dichloro-1,3-butadiene was not copolymerized in the chloroprene polymer latex B, the crystallinity of the chloroprene polymer in the obtained dip molded coating became higher, the value of the modulus at 100% elongation became higher, and flexibility was poor.

In Comparative Example 5, the polymerization conversion rate of the chloroprene polymer latex B was low, the toluene insoluble content (gel fraction) of the chloroprene polymer latex B became lower, and the breaking strength was poor. Furthermore, the value of the modulus at 100% elongation became higher and flexibility was poor.

In Reference Example 1, when a dip molded coating was produced using only the chloroprene polymer latex B without mixing the chloroprene polymer latex A, the breaking strength was excellent, but the value of the modulus at 100% elongation became higher, and flexibility was poor. From this point, it is found that by mixing the chloroprene polymer latex A containing a low-molecular-weight chloroprene polymer, the plasticizing effect by the low-molecular-weight chloroprene polymer is exhibited, and a dip molded coating excellent in flexibility is obtained.

In Reference Example 2, when a dip molded coating was produced using only the chloroprene polymer latex A without mixing the chloroprene polymer latex B, stickiness became severe due to the low-molecular-weight chloroprene polymer, so that a dip molded coating could not be produced.

**Claims**

1. A chloroprene polymer latex composition being a mixture of a chloroprene polymer latex A and a chloroprene polymer latex B, wherein

   the chloroprene polymer latex A and the chloroprene polymer latex B comprise a chloroprene polymer,
   the chloroprene polymer of the chloroprene polymer latex B contains a copolymer of chloroprene with 2,3-dichloro-1,3-butadiene,
   a 2,3-dichloro-1,3-butadiene copolymerized amount in the chloroprene polymer of the chloroprene polymer latex B is 3% by mass or more with respect to a total of 100% by mass of the chloroprene and the 2,3-dichloro-1,3-butadiene,
   a toluene insoluble content of the chloroprene polymer of the chloroprene polymer latex B is 70% by mass or more,
   a weight average molecular weight of a toluene soluble content in the chloroprene polymer latex A is 5,000 to 250,000, and
   in a measurement result of gas chromatograph mass spectrometry of an extract which is extracted from a dried product obtained by freeze-drying the chloroprene polymer latex composition with an ethanol/toluene azeotropic mixture (an ethanol/toluene azeotropic mixture defined in JIS K 6229), a mass ratio b/a of a total amount b of abietic acid, neoabietic acid, palustric acid, levopimaric acid, and salts thereof with respect to a total amount a of dehydroabietic acid, pimaric acid, isopimaric acid, dihydroabietic acid, and salts thereof is 0.10 or more.

2. The chloroprene polymer latex composition according to claim 1, wherein a toluene insoluble content of the chloroprene polymer of the chloroprene polymer latex A is 10% by mass or less.

3. The chloroprene polymer latex composition according to claim 1 or 2, wherein the toluene insoluble content of the chloroprene polymer of the chloroprene polymer latex B is 70 to 95% by mass.

4. The chloroprene polymer latex composition according to any one of claims 1 to 3, wherein a ratio of the chloroprene polymer latex A is 0.5 to 30 parts by mass with respect to a total of 100 parts by mass of the chloroprene polymer latex A and the chloroprene polymer latex B, and
   a toluene insoluble content of a chloroprene polymer contained in the chloroprene polymer latex composition is 50 to 85% by mass.

5. A dip molded body using the chloroprene polymer latex composition according to any one of claims 1 to 4.

6. The dip molded body according to claim 5, wherein the dip molded body does not contain sulfur and a vulcanization accelerator.

7. The dip molded body according to claim 6, wherein the dip molded body is gloves, balloons, catheters, or boots.

**Patentansprüche**

1. Chloroprenpolymerlatexzusammensetzung, die eine Mischung aus einem Chloroprenpolymerlatex A und einem Chloroprenpolymerlatex B ist, wobei

der Chloroprenpolymerlatex A und der Chloroprenpolymerlatex B ein Chloroprenpolymer umfassen,
das Chloroprenpolymer des Chloroprenpolymerlatex B ein Copolymer von Chloropren mit 2,3-Dichlor-1,3-butadien enthält,
die 2,3-Dichlor-1,3-butadien copolymerisierte Menge im Chloroprenpolymer des Chloroprenpolymerlatex B ist 3 Massenprozent oder mehr, bezogen auf eine Gesamtmenge von 100 Massenprozent des Chloroprens und des 2,3-Dichlor-1,3-butadiens,
der toluolunlösliche Gehalt des Chloroprenpolymers des Chloroprenpolymerlatex B ist 70 Massenprozent oder mehr,
das gewichtsmittlere Molekulargewicht des in Toluol löslichen Gehalts im Chloroprenpolymerlatex A ist 5.000 bis 250.000 und
in einem Messergebnis der Gaschromatographie-Massenspektrometrie eines Extrakts, der aus einem getrockneten Produkt extrahiert wird, das durch Gefriertrocknen der Chloroprenpolymerlatex-Zusammensetzung mit einer azeotropen Ethanol/Toluol-Mischung (eine azeotrope Ethanol/Toluol-Mischung, definiert in JIS K 6229) erhalten wird, ein Massenverhältnis b/a einer Gesamtmenge b von Abietinsäure, Neoabietinsäure, Palustrinsäure, Levopimarsäure und Salzen davon in Bezug auf eine Gesamtmenge a von Dehydroabietinsäure, Pimarsäure, Isopimarsäure, Dihydroabietinsäure und Salzen davon 0,10 oder mehr beträgt.

2. Chloroprenpolymerlatexzusammensetzung gemäß Anspruch 1, wobei der toluolunlösliche Gehalt des Chloroprenpolymers des Chloroprenpolymerlatex A 10 Massenprozent oder weniger beträgt.

3. Chloroprenpolymerlatexzusammensetzung gemäß Anspruch 1 oder 2, wobei der toluolunlösliche Gehalt des Chloroprenpolymers des Chloroprenpolymerlatex B 70 bis 95 Massenprozent beträgt.

4. Chloroprenpolymerlatex-Zusammensetzung gemäß mindestens einem der Ansprüche 1 bis 3, wobei das Verhältnis des Chloroprenpolymerlatex A 0,5 bis 30 Masseteile beträgt, bezogen auf insgesamt 100 Masseteile des Chloroprenpolymerlatex A und des Chloroprenpolymerlatex B, und
der toluolunlösliche Gehalt eines in der Chloroprenpolymerlatexzusammensetzung enthaltenen Chloroprenpolymers 50 bis 85 Massenprozent beträgt.

5. Tauchformkörper unter Verwendung der Chloroprenpolymerlatexzusammensetzung gemäß mindestens einem der Ansprüche 1 bis 4.

6. Tauchformkörper gemäß Anspruch 5, wobei der Tauchformkörper keinen Schwefel und keinen Vulkanisationsbeschleuniger enthält.

7. Tauchformkörper gemäß Anspruch 6, wobei der Tauchformkörper Handschuhe, Ballons, Katheter oder Stiefel ist.

**Revendications**

1. Composition de latex de polymère de chloroprène étant un mélange d'un latex de polymère de chloroprène A et d'un latex de polymère de chloroprène B, dans laquelle

le latex de polymère de chloroprène A et le latex de polymère de chloroprène B comprennent un polymère de chloroprène,

le polymère de chloroprène du latex de polymère de chloroprène B contient un copolymère de chloroprène et de 2,3-dichloro-1,3-butadiène,

une quantité copolymérisée de 2,3-dichloro-1,3-butadiène dans le polymère de chloroprène du latex de polymère de chloroprène B est de 3 % en masse ou plus par rapport à un total de 100 % en masse du chloroprène et du 2,3-dichloro-1,3-butadiène,

une teneur insoluble dans le toluène du polymère de chloroprène du latex de polymère de chloroprène B est de 70 % en masse ou plus,

un poids moléculaire moyen en poids d'une teneur soluble dans le toluène dans le latex de polymère de chloroprène A est de 5000 à 250 000, et

dans un résultat de mesure de spectrométrie de masse par chromatographe en phase gazeuse d'un extrait qui est extrait d'un produit séché obtenu par lyophilisation de la composition de latex de polymère de chloroprène avec un mélange azéotropique éthanol/toluène (un mélange azéotropique éthanol/toluène défini dans JIS K 6229), le rapport de masse b/a d'une quantité totale b d'acide abiétique, d'acide néoabiétique, d'acide palustre, d'acide lévopimarique, et de leurs sels par rapport à une quantité totale a d'acide déhydroabiétique, d'acide pimarique, d'acide isopimarique, d'acide dihydroabiétique, et de leurs sels est de 0,10 ou plus.

2. Composition de latex de polymère de chloroprène selon la revendication 1, dans laquelle la teneur insoluble dans le toluène du polymère de chloroprène du latex de polymère de chloroprène A est de 10 % en masse ou moins.

3. Composition de latex de polymère de chloroprène selon la revendication 1 ou la revendication 2, dans laquelle la teneur insoluble dans le toluène du polymère de chloroprène du latex de polymère de chloroprène B est de 70 à 95 % en masse.

4. Composition de latex de polymère de chloroprène selon l'une quelconque des revendications 1 à 3, dans laquelle un rapport du latex de polymère de chloroprène A est de 0,5 à 30 parts en masse par rapport à un total de 100 parts en masse du latex de polymère de chloroprène A et du latex de polymère de chloroprène B, et une teneur insoluble dans le toluène d'un polymère de chloroprène contenu dans la composition de latex de polymère de chloroprène est de 50 à 85 % en masse.

5. Corps moulé par immersion utilisant la composition de latex de polymère de chloroprène selon l'une quelconque des revendications 1 à 4.

6. Corps moulé par immersion selon la revendication 5, dans lequel le corps moulé par immersion ne contient pas de soufre ni d'accélérateur de vulcanisation.

7. Corps moulé par immersion selon la revendication 6, dans lequel le corps moulé par immersion est des gants, des ballons, des cathéters, ou des bottes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7292165 A
- JP 2014114342 A
- WO 2019009038 A
- JP 2019143002 A